# EUROPÄISCHE PATENTSCHRIFT

(11) **EP 2 553 388 B1**
(45) Veröffentlichungstag und Bekanntmachung des Hinweises auf die Patenterteilung: **16.04.2014**
(21) Anmeldenummer: 11714506.0
(22) Anmeldetag: 28.03.2011
(51) Int. Cl.: G01C 9/06, G01C 9/20

(54) **OPTOELEKTRONISCHER NEIGUNGSSENSOR**
OPTOELECTRONIC INCLINATION SENSOR
CAPTEUR D'INCLINAISON OPTOÉLECTRONIQUE

(30) Priorität: 29.03.2010 DE 102010016183
(43) Veröffentlichungstag der Anmeldung: 06.02.2013
(73) Patentinhaber: Sartorius Lab Instruments GmbH & Co. KG, 37075 Göttingen (DE)
(72) Erfinder: MÜLLER, Ralf, 09648 Mittweida (DE)
(74) Vertreter: Engel, Christoph Klaus
(86) Internationale Anmeldenummer: PCT/EP2011/054741
(87) Internationale Veröffentlichungsnummer: WO 2011/124496

(56) Entgegenhaltungen:
- DE-C1- 19 819 610
- DE-U1-202004 010 922
- FR-A1- 2 868 834

## Beschreibung

Die Erfindung betrifft einen optoelektronischen Neigungssensor zur Bestimmung der Neigung einer Bezugsebene gegenüber der horizontalen Lage, insbesondere zur gleichzeitigen Erfassung von Neigungen um zwei Achsen gemäß dem Oberbegriff des Anspruchs 1.

Ein gattungsgemäßer optischer Neigungssensor umfasst einen mit einer Flüssigkeit teilweise gefüllten Sensorkörper, wobei die Flüssigkeitsschicht eine optische Grenzfläche (z.B. Flüssigkeit-Luft) bereitstellt, die einen Horizont bildet. Am Sensorkörper ist beispielsweise als Bodenfläche die Bezugsebene ausgebildet, deren Neigung bestimmt werden soll. Weiterhin ist eine Lichtquelle zur Emission eines die Flüssigkeit durchlaufenden und auf die Grenzfläche gerichteten Lichtstrahles vorgesehen. Eine optische Sensorfläche, welche der Detektion des von der Grenzfläche reflektierten Lichtstrahls dient, ist innerhalb oder außerhalb des Sensorkörpers angeordnet. Schließlich ist eine Auswerteeinheit zur Bestimmung der Neigung der Ebene in Abhängigkeit von der durch die optische Sensorfläche empfangenen Lichtmenge vorgesehen.

Die DE 198 19 610 C1 beschreibt einen optischen Neigungsmesser, bei dem ein Gehäuse mit einer transparenten Flüssigkeit gefüllt ist, welche die Richtung eines optischen Strahlenbündels neigungsabhängig ändert. Es ist eine Lichtquelle zur Beleuchtung einer Struktur oder zur Erzeugung eines Lichtpunktes vorgesehen, welche einen Lichtstrahl auf die Grenzfläche Flüssigkeit-Luft derart richtet, dass seine Reflexion auf eine Sensorfläche auftrifft und dort detektiert wird. Die optischen Mittel zur Abbildung der Struktur oder des Lichtpunktes oder - flecks sind auf der Unterseite des Bodens des Gehäuses angeordnet oder sind Bestandteil dieses Bodens. Weiterhin sind diese optischen Mittel aus einem einzigen, das Licht ein- und auskoppelnden und die Struktur oder den Lichtpunkt abbildenden Element gebildet.

Aus der DE 20 2004 010 922 U1 ist ein gattungsgemäßer Neigungssensor mit einem kombinierten Glas-Flüssigkeitsprisma bekannt, bei dem der Lichtstrahl am Flüssigkeitshorizont eine Totalreflexion erfährt, sodass der Ablenkungswinkel das Doppelte des Einfallswinkels beträgt.

Die DE 20 2007 002 771 U1 beschreibt einen zweiachsigen optischen Neigungsmesser mit einer LED als Strahlungsquelle, einem Gehäuse mit einer einen Horizont ausbildenden Flüssigkeit, einem Sensor zum Empfangen der Strahlung sowie mit optischen Mitteln mit einem Strahlengang zur Abbildung der Strahlung auf dem Sensor. Die Vorrichtung umfasst weiterhin eine Auswerteeinheit zur Bestimmung der Neigung aus den vom Sensor abgegebenen Signalen. Die optischen Mittel bilden eine Marke auf dem Sensor derart ab, dass aus der Lage der Marke auf dem Sensor die Neigung in zwei orthogonalen Achsen bestimmbar ist. Die Strahlung soll bei Reflexion am Flüssigkeitshorizont im Wesentlichen senkrecht reflektiert werden. Bei dem senkrechten Auftreffen des Lichtstrahls auf die Grenzfläche am Flüssigkeitshorizont ist zu erwarten, dass ein Großteil des Lichts nicht reflektiert sondern an der Grenzfläche mehr oder weniger stark gebrochen austritt.

Die FR 2 868 834 B1 beschreibt einen zweiachsigen Neigungssensor, der einen abschnittsweise sphärisch geformten Sensorkörper umfasst, in welchem eine einen Horizont ausbildende Flüssigkeit angeordnet ist. Der Sensorkörper besitzt an seiner Rotationsachse eine Lichtstrahlquelle, welche einen Ringlichtstrahl auf die Flüssigkeitsoberfläche leitet. Dieser wird an der Oberfläche reflektiert und mittels Sensoren detektiert. Die Sensoren sind außerhalb des Sensorkörpers angeordnet. Der Sensorkörper umfasst vier Fenster, durch welche die reflektierten Lichtstrahlen auf die Sensoren auftreffen können. Die Fenster sind entweder an der Unterseite des Sensorkörpers oder an der sphärischen Mantelfläche vorgesehen. Die Sensoren verkörpern dabei Nord-Süd- bzw. Ost-West-Achsen.

Es sind ebenso Neigungsmessgeräte mit Libellen bekannt. Für eine zweidimensionale Messung werden Dosenlibellen verwendet. Ein Neigungssensor mit einer solchen Dosenlibelle ist beispielsweise in der DE 10 2005 056 736 B4 beschrieben. Zur elektronischen Ermittlung der Neigung bei einer Dosenlibelle ist eine Strahler-Empfänger-Baugruppe oberhalb des Deckglases angeordnet, wobei das vom Strahler ausgesendete Licht an der Grenzfläche Deckglas-Luftblase bei zentrierter Luftblase zumindest teilweise total reflektiert wird. Der Nachteil der Libellensensoren ist insbesondere darin begründet, dass die Oberfläche, an der die Liebelle anliegt, in einem bestimmten Radius gekrümmt ist. Die Krümmung ist dabei den Anforderungen an die Empfindlichkeit der Libelle angepasst und wird durch Schleifen hergestellt, was die Oberfläche in einem gewissen Maße aufraut, wodurch die Gasblase zum Springen neigen kann und die Genauigkeit des Sensors beeinträchtigt. Aufgrund der Form der Gasblase und der Krümmung des Deckglases ergibt sich eine nichtlineare Kennlinie des Sensors. Außerdem ist die Größe der Gasblase von der Temperatur des Sensors abhängig, was sich ungünstig auf den Einsatzbereich solcher Sensoren auswirkt.

Aus der Zeitschrift "Technisches Messen" Ausgabe 75, 2008, ist eine Laser basierte Strahler-Empfänger-Baugruppe mit integrierter Mikrooptik zur Messung von Streulicht bekannt. Die Strahler-Empfänger-Baugruppe ist in einem quadratischen Siliziumsubstrat realisiert, in welchem rotationssymmetrisch Photodiodensegmente eingebracht sind. Diese umgeben eine zentrale Tiefenätzung in der sich ein Laser befindet. Auf dem Siliziumsubstrat wird ein Abstandsmedium aufgebracht, welches aus einem für die Wellenlänge des Lasers undurchlässigen Glas besteht. Über dem Laser und über den Photodioden ist der Abstandshalter mit Durchbrüchen versehen. So werden Quelle und Empfänger voneinander optisch isoliert. Im zentralen Bereich des Durchbruchs ist eine Mikrooptik untergebracht. Der Sensor wird durch einen Optikträger komplettiert. Dieser besteht zum einen aus einem Träger aus chemisch beständigem Material. Zum anderen sind auf der Unterseite dieses Trägers lichtundurchlässige und strukturierbare Blenden aufgebracht. Auf dieser Blendenstruktur befindet sich die Mikrooptik. Sie hat die Form eines Rings mit radial symmetrischem asphärischem Querschnitt (Ringlinse).

Der Erfindung liegt die Aufgabe zu Grunde, einen optoelektronischen Neigungssensor auf der Basis einer horizontbildenden Flüssigkeit zu schaffen, welcher eine genaue Detektion der Neigung einer Bezugsebene gegenüber der Horizontalen gestattet, vorzugsweise in Bezug auf zwei die Lage der Bezugsebene eindeutig definierender Achsen. Der Neigungssensor soll robust gegen Umgebungseinflüsse und relativ aufwandsarm herstellbar sein.

Die Aufgabe wird erfindungsgemäß durch einen Neigungssensor mit den Merkmalen des Anspruchs 1 gelöst.

Ein erfindungsgemäßer Neigungssensor zur Bestimmung der Neigung einer Bezugsebene gegenüber der horizontalen Lage umfasst zunächst in bekannter Weise einen mit einer Flüssigkeit teilweise gefüllten Sensorkörper, der in seinem Inneren eine einen Horizont bildende optische Grenzfläche (z.B. Flüssigkeit-Luft) aufweist. An einer Oberfläche des Sensorkörpers ist die Bezugsebene ausgebildet, deren Neigung bestimmt werden soll. Der Sensor umfasst weiterhin mindestens eine Lichtquelle zur Emission eines Lichtstrahls auf die Grenzfläche durch die Flüssigkeit hindurch. Eine optische Sensorfläche zur Detektion des von der Grenzfläche reflektierten Lichtstrahls ist innerhalb des Sensorkörpers angeordnet. Eine Auswerteeinheit bestimmt die Neigung der Bezugsebene in Abhängigkeit von der durch die optische Sensorfläche empfangenen Lichtmenge.

Erfindungsgemäß ist zwischen der Lichtquelle und der Flüssigkeit ein Ablenkelement vorgesehen, durch welches der Lichtstrahl ein erstes Mal total reflektiert wird, bevor nach Durchlaufen der Flüssigkeit eine zweite Totalreflexion an der optischen Grenzfläche stattfindet.

Die Vorteile der Erfindung sind insbesondere darin zu sehen, dass durch das flache Auftreffen des Lichtstrahls auf die Grenzfläche eine nahezu vollständige Totalreflexion garantiert ist. Es geht nur sehr wenig Licht durch Streuung oder Brechung an der Grenzfläche verloren, sodass eine Strahler-Empfänger-Baugruppe preiswert herstellbar ist.

In einer besonders bevorzugten Ausführungsform der Erfindung wird der Lichtstrahl als Ringlichtstrahl gebildet. Vorzugsweise umfasst die Lichtstrahlquelle eine Ringlinse und/oder eine Ringförmige Blende zur Formung des Lichtstrahls.

Bei einer zweckmäßigen Ausführungsform ist die Lichtquelle in einer Kavität eines Siliziumsubstrates angeordnet und senkrecht zur Ebene des Sensors ausgerichtet. Diese Ausgestaltung lässt sich mit leicht handhabbaren Herstellungsverfahren preiswert erzeugen.

In einer vorteilhaften Ausführungsvariante ist die optische Sensorfläche durch mindestens zwei Photodioden gebildet, die gemeinsam mit der Lichtquelle auf dem Siliziumsubstrat angeordnet sind. Durch geeignete Prozessschritte können sämtliche aktiven Bauteile unmittelbar auf einem Trägersubstrat ausgebildet werden. Die mindestens zwei Photodioden sind dabei diametral links und rechts der Lichtquelle angeordnet. Beim Fehlen einer Neigung der Bezugsebene ist die detektierte Lichtmenge der beiden Photodioden im Wesentlichen gleich, während beim Vorhandensein einer Neigung die Lichtmenge an den Photodioden gegenläufig verändert ist.

In einer besonders bevorzugten Ausführungsform ist die optische Sensorfläche durch eine Vielzahl segmentförmiger Photodioden gebildet, die Konzentrisch um die Lichtquelle herum angeordnet sind. Dabei bilden jeweils zwei diametral angeordnete Photodioden ein Paar, das ein Sensorsignal liefert. Als Signal kann die Differenz der beiden Photoströme herangezogen werden.

Das Ablenkelement zur Herstellung der ersten Totalreflexion ist bei der Verwendung eines Ringlichtstrahles vorzugsweise kegelstumpfförmig ausgeführt und zentriert mit der Lichtquelle angeordnet, wobei eine zur Lichtquelle gerichtete Deckfläche des Kegelstumpfes einen Durchmesser aufweist, der kleiner als der Durchmesser des Ringstrahles ist, und eine zur Flüssigkeitsschicht gerichtete Basisfläche des Kegelstumpfes einen Durchmesser aufweist, der größer ist als der Durchmesser des Ringstrahls, sodass der Ringstrahl vollständig an der Mantelfläche des Ablenkelements in Richtung zur Grenzfläche reflektiert wird. Der Winkel des Kegelstumpfes wird dabei so gewählt, dass je nach verwendeten Medien mindestens der nach dem snelliusschen Brechungsgesetz ermittelte Grenzwinkel als Einfallswinkel des Lichtstrahls erreicht wird.

Das Ablenkelement ist in einer bevorzugten Ausführungsform als eine Kavität in einer lichtdurchlässigen Schicht gebildet. Die lichtdurchlässige Schicht ist dabei vorzugsweise aus einem Acrylglas hergestellt. An der Oberseite der lichtdurchlässigen Schicht ist das Ablenkelement durch eine Vertiefung mit der Form eines Kegelstumpfes versehen. Über dieser lichtdurchlässigen Schicht ist im Sensor nun die Flüssigkeit angeordnet, wobei die Flüssigkeit auch die Vertiefung in der lichtdurchlässigen Schicht ausfüllt.

In einer anderen bevorzugten Ausführungsform ist die Kavität in der lichtdurchlässigen Schicht mit einem Gas gefüllt oder mit Vakuum versehen. Dies könnte in der Weise geschehen, dass auf die lichtdurchlässige Schicht eine dünne Glasplatte beispielsweise geklebt wird. Über dieser Platte kann dann eine beliebige Flüssigkeit angeordnet werden.

Aufgrund der Möglichkeit der Strukturierung der Schichten sowie der bereits erwähnten Materialien, lässt sich der Sensor komplett auf einem Wafer aufbauen, sodass besonders kleine und leichte Sensoren hergestellt werden können.

Die Erfindung und ihre Einzelheiten werden nachfolgend anhand der Zeichnung näher erläutert. Es zeigen:
- Fig. 1:: eine erste Ausführungsform eines erfindungsgemäßen Neigungssensors mit einem flüssigkeitsgefüllten Ablenkelement in einem Querschnittsschichtmodell;
- Fig. 2:: einen Strahlengang in einer y-z-Ebene in horizontaler Lage einer Bezugsebene;
- Fig. 3:: eine Ausführungsform einer optischen Sensorfläche;
- Fig. 4:: eine zweite Ausführungsform eines erfindungsgemäßen Sensors mit einem gasgefüllten Ablenkelement;
- Fig. 5:: den Verlauf der detektierten Lichtmenge an den optischen Sensorflächen.

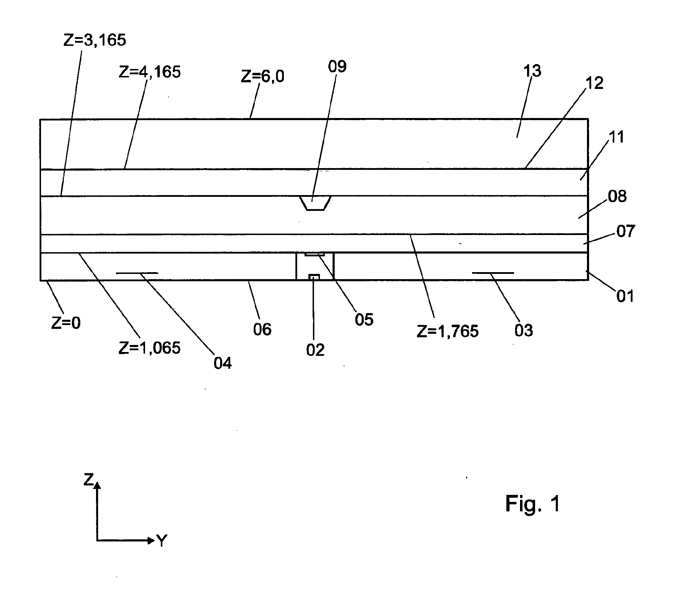

Fig. 1 zeigt den beispielhaften Aufbau einer ersten Ausführungsform eines erfindungsgemäßen Neigungssensors in einem Querschnittsschichtmodell. Der Sensor umfasst eine optoelektronische Strahler-Empfänger-Baugruppe 01 mit einer integrierten Mikrooptik zur Formung eines Ringlichtstrahles. Die Strahler-Empfänger-Baugruppe ist aus einem Siliziumsubstrat hergestellt. Im Zentrum des Siliziumsubstrates ist eine Kavität eingebracht. In dieser Kavität ist als Lichtquelle ein vertikal emittierender Laser 02 angeordnet. Diametral zum Laser 02 sind eine erste Photodiode 03 und eine zweite Photodiode 04 angeordnet. An der Unterseite der Strahler-Empfänger-Baugruppe 01 ist eine Bezugsebene 06 ausgebildet, deren Neigung gegenüber der Horizontalen durch den Neigungssensor bestimmt werden kann. Dazu wird der Neigungssensor mit der Bezugsebene 06 auf die auszumessende Fläche oder Ebene aufgelegt oder fest montiert. Die Neigung des Sensors entspricht dann der Neigung der zu vermessenden Fläche.

Oberhalb der Strahler-Empfänger-Baugruppe 01 ist eine optisch transparente Deckschicht 07 vorzugsweise aus Borofloat ausgebildet. Borofloat ist ein Borosilikatglas, mit hervorragenden optischen Eigenschaften. Die Deckschicht 07 dient zunächst dem Schutz der Strahler-Empfänger-Baugruppe 01 und der Formgebung des gewünschten Ringlichtstrahls, indem eine Ringlinse 05 als Mikrooptik an der Unterseite der Deckschicht 07 ausgebildet ist und in die Kavität hineinragt. An der Unterseite der Deckschicht 07 können außerdem lichtundurchlässige und strukturierbare Blenden und Linsen zur weiteren Formung des Ringlichtstrahls und zur optischen Trennung von Sender und Empfänger vorgesehen sein.

Das Spezialglas der Deckschicht 07 ist aber auch chemisch beständig. Damit eignet es sich hervorragend dafür, verschiedene Flüssigkeiten in dem Neigungssensor zu verwenden bzw. andere Schichten optisch anzukoppeln.

Oberhalb der lichtdurchlässigen Deckschicht 07 ist eine weitere lichtdurchlässige Ablenkschicht 08 vorzugsweise aus einem Acrylglas vorgesehen. In dieser lichtdurchlässigen Ablenkschicht 08 ist ein Ablenkelement 09 vorgesehen, dass als z.B. kegelstumpfförmige Kavität in der lichtdurchlässigen Ablenkschicht 08 ausgebildet ist. Bei abgewandelten Ausführungsformen können die Deckschicht 07 und die Ablenkschicht 08 einstückig ausgebildet sein.

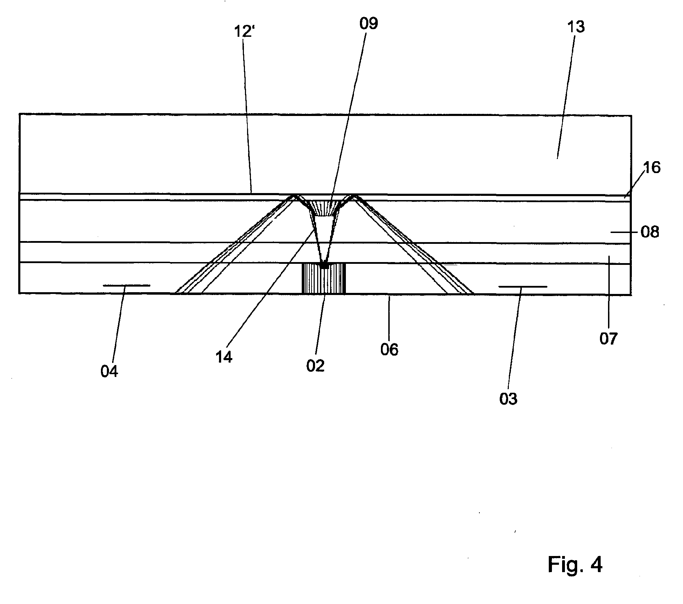

Oberhalb der Ablenkschicht 08 befindet sich eine Flüssigkeit 11, welche eine optische Grenzfläche 12 z.B. zu einer Luftschicht 13 ausbildet. Die Flüssigkeit 11 kann in einem Behälter angeordnet sein, der als flächige Vertiefung in der Ablenkschicht 08 ausgearbeitet ist. Die Luftschicht 13 kann durch ein Gas, durch Vakuum oder durch eine weitere Flüssigkeit, die mit der ersten Flüssigkeit 11 nicht mischbar ist, gebildet sein. Wesentlich ist dabei, dass durch unterschiedliche Brechungsindizes die optische Grenzfläche 12 an der Oberfläche der Flüssigkeit 11 vorhanden ist, die aufgrund der Schwerkraft ihre horizontal ausgerichtete Lage auch bei einer Neigung des Sensors beibehält. Der hier dargestellte Sensor funktioniert beispielsweise mit Wasser als Flüssigkeit 11 und den daraus resultierenden Brechzahlen. Es können aber auch andere Flüssigkeit verwendet werden, beispielsweise um durch höhere Viskosität eine Dämpfung bei der Verkippung zu erreichen (siehe dazu Fig. 4).

Der Neigungssensor ist in den Figuren in der horizontalen Lage dargestellt, sodass die Bezugsebene 06 und die Grenzfläche 12 parallel sind. In Fig. 1 sind Beispielwerte angegeben, um die Dicke der einzelnen Schichten in Z-Richtung zu verdeutlichen (alle Angaben in mm).

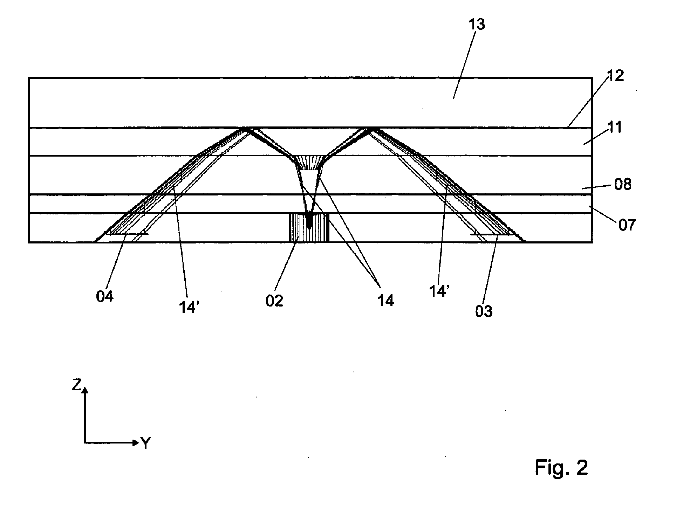

In Fig. 2 ist ein typischer Strahlengang in dem in Fig. 1 dargestellten Sensor in horizontaler Lage dargestellt. Ein vom Laser 02 emittierter und durch eine Mikrooptik geformter Ringlichtstrahl 14 wird nach dem Übergang in die lichtdurchlässige Deckschicht 08 zweimal total reflektiert. Die erste Totalreflexion findet an der Mantelfläche des Ablenkelementes 09 statt (Grenzfläche: Deckschicht 08 - Flüssigkeit 11 im Ablenkelement 09). Die zweite Totalreflexion findet an der Grenzfläche 12 (Flüssigkeit 11 - Luft 13) statt. Nach der zweiten Totalreflexion gelangt die reflektierte Strahlung 14' auf die Photodioden 03, 04 bzw. auf die anderen Bereiche eines absorbierenden Bodens in der Strahler-Empfänger-Einheit 01. Wird der Sensor geneigt, verändert die Flüssigkeitsoberfläche ihre Lage zur Fläche der ersten Totalreflexion am Ablenkelement 09 bzw. die Lage zur Bezugsebene 06. Es resultiert der Messeffekt: Die Photoströme der beiden Photodioden 03, 04 kommen in einem gegenläufigen Betrag aus dem Gleichgewicht. Als Sensorsignal kann die Differenz der beiden Photoströme herangezogen werden.

Es ist darauf hinzuweisen, dass bei abgewandelten Ausführungsformen die erste Totalreflexion durch eine optisch Beugung oder Brechung ersetzt werden kann, um den Auftreffwinkel des Lichtstrahls auf die Grenzfläche 12 in der Weise einzustellen, dass in allen Betriebslagen des Sensors dort eine Totalreflexion sichergestellt ist. Beispielsweise lässt sich dies mit einer in die Mikrooptik der Strahler-Empfänger-Einheit 01 integrierten Ablenkeinheit erreichen. Die Nutzung eines räumlich abgesetzten Ablenkelements gestattet jedoch eine besonders flache Bauweise und in Y-Richtung eine geringe Ausdehnung des Sensors.

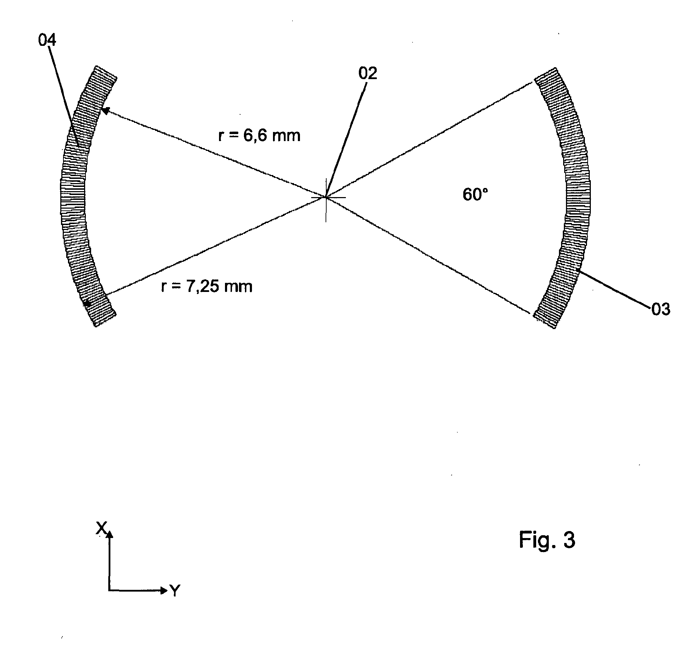

Fig. 3 zeigt eine beispielhafte Ausführungsform zweier diametral angeordneter Sensorelemente 03 und 04. Die Sensorelemente 03 und 04 sind kreissektorförmig ausgebildet. Das Layout der beiden Sensorelemente 03, 04 wurde so gewählt, dass der äußere Radius der Segmente in etwa dem Radius der maximalen Bestrahlungsstärke des Ringlichtstrahls entspricht.

Fig. 4 zeigt eine abgewandelte Ausführungsform des Sensors, bei der eine von der Brechzahl her beliebige Flüssigkeit verwendet werden kann. Dazu ist das Volumen innerhalb des Ablenkelementes 09 mit einem Gas gefüllt oder mit Vakuum versehen. Dazu wird beispielsweise auf die Ablenkschicht 08 eine dünne Glasplatte 16 geklebt. Oberhalb dieser Glasplatte 16 kann dann eine beliebige Flüssigkeit eingefüllt werden. In der hier dargestellten Abbildung ist keine Flüssigkeit eingezeichnet. Der Strahlengang 14 in Fig. 4 zeigt, dass sich an der Grenzfläche 12' zwischen Glasplatte 16 und der Luftschicht 13 eine Totalreflexion einstellt. Damit kann diese Glasplatte mit einer beliebigen Flüssigkeit überschichtet werden, es kommt dann zur Totalreflexion an der Flüssigkeitsoberfläche und zum angestrebten Messeffekt. Die horizontale Lage der Detektoren 03, 04 muss der Brechzahl der Flüssigkeit und der Füllstandshöhe angepasst werden.

Die Eigenschaften der Flüssigkeit wie Ausdehnungskoeffizient, Gefrierpunkt, Temperaturabhängigkeit, Brechzahl, Dampfdruck, Viskosität, Absorptionskoeffizient, Alterung und so weiter müssen berücksichtigt und auf den jeweiligen Einsatzzweck des Sensors abgestimmt werden.

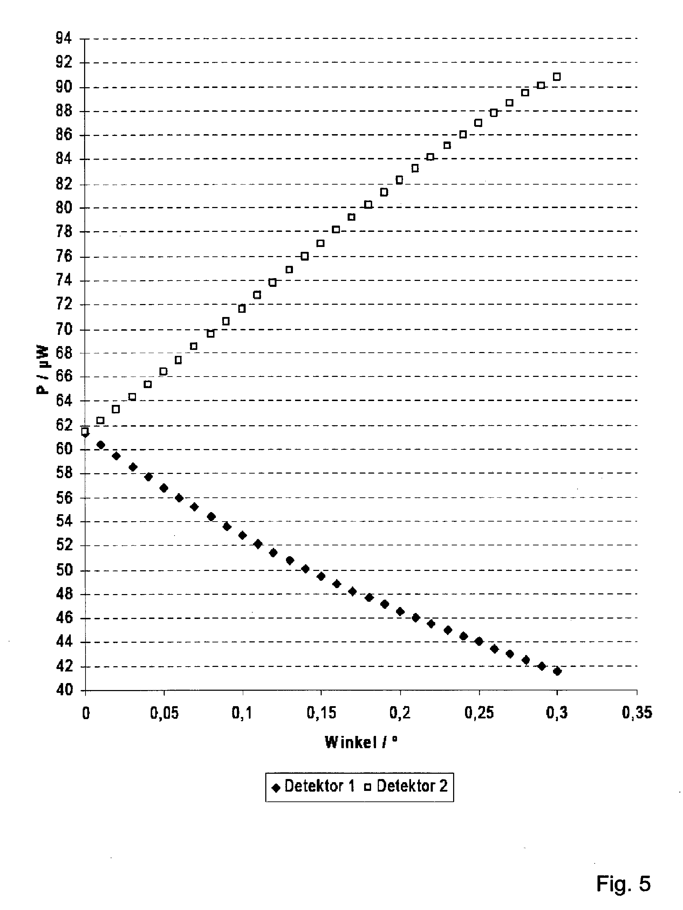

Fig. 5 zeigt den Verlauf der optischen Leistung auf den Sensorelementen 03, 04 über einen Neigungswinkelbereich von 0 bis 0,3°. Dabei wurde die Sensorkennlinie für die Neigung um eine Achse aufgenommen. Die Bestrahlungsstärkeverteilung ist in der Ebene der Detektoren dargestellt. Dabei zeigt die untere Kurve den Verlauf der optischen Leistung auf dem Detektor 03, während die obere Kennlinie den Verlauf der optischen Leistung auf dem Detektor 04 zeigt. Die Neigung der Fläche 06 erfolgte dabei gegen den Uhrzeigersinn. Der Laser sendet eine optische Leistung von 1 mW aus. Im austarierten Zustand empfängt jeder der beiden Detektoren eine optische Leistung von ca. 61,4 µW. Dies entspricht bei einer Sensitivität von 0,6 A/W einem Photostrom von 36,84 pA. Prinzipiell wird als Sensorsignal die Differenz der Photoströme vom Detektor 03 und 04 vorgeschlagen. Es sei daran erinnert, dass mit dem Sensor Neigungen um beide Achsen der Bezugsebene 06 bestimmt werden können, insbesondere durch Verwendung weiterer Detektoren, die um 90° verdreht angeordnet sind.

### Bezugszeichenliste:

- 01: Strahler-Empfänger-Einheit
- 02: vertikal emittierender Laser / Lichtquelle
- 03: erste Photodiode
- 04: zweite Photodiode
- 05: Ringlinse
- 06: Bezugsebene
- 07: lichtdurchlässige Deckschicht
- 08: lichtdurchlässige Ablenkschicht
- 09: Ablenkelement
- 10: -
- 11: Flüssigkeitsschicht
- 12: Grenzfläche
- 13: Luftschicht
- 14: Ringlichtstrahl
- 15: -
- 16: Glasplatte

## Patentansprüche

1. Optoelektronischer Neigungssensor zur Bestimmung der Neigung einer Bezugsebene (06) gegenüber der Horizontalen, umfassend:
- einen Sensorkörper mit einer Flüssigkeitsschicht (11), deren freie Oberfläche einen zur Bezugsebene (06) kippbaren Horizont darstellt und eine optische Grenzfläche (12) zum angrenzenden Medium bildet;
- mindestens eine unterhalb der Flüssigkeitsschicht (11) angeordnete Lichtquelle (02), zur Emission eines Lichtstrahls (14) auf die Grenzfläche (12) durch die Flüssigkeitsschicht (11) hindurch, wobei der Lichtstrahl (14) mit einer senkrecht zur Bezugsebene (06) ausgerichteten Strahlachse ausgesendet wird;
- mindestens eine unterhalb der Flüssigkeitsschicht (11) angeordnete optische Sensorfläche (03, 04) zur Detektion des von der Grenzfläche (12) reflektierten Lichtstrahls (14'); und
- eine Auswerteeinheit zur Bestimmung der Neigung der Bezugsebene (06) in Abhängigkeit von der durch die optische Sensorfläche (03, 04) empfangenen Lichtmenge;
**dadurch gekennzeichnet, dass** zwischen der Lichtquelle (02) und der Flüssigkeitsschicht (11) eine Ablenkschicht (08) mit einem Ablenkelement (09) zur ersten Totalreflexion des Lichtstrahls (14) angeordnet ist, sodass der Lichtstrahl (14) im Ergebnis dieser ersten Totalreflexion gegenüber der Grenzfläche (12) derart geneigt ist, dass eine zweite Totalreflexion an der Grenzfläche (12) eintritt, sowohl in geneigter als auch nicht geneigter Lage.

2. Neigungssensor nach Anspruch 1, **dadurch gekennzeichnet, dass** der Lichtstrahl als Ringlichtstrahl (14) geformt ist.

3. Neigungssensor nach Anspruch 1 oder 2, **dadurch gekennzeichnet, dass** die Lichtquelle (02) eine Ringlinse und/oder eine ringförmige Blende zur Formung des Lichtstrahls (14) umfasst.

4. Neigungssensor nach einem der Ansprüche 1 bis 3, **dadurch gekennzeichnet, dass** die Lichtquelle (02) in einer Kavität eines Silizium-Substrates angeordnet ist.

5. Neigungssensor nach einem der Ansprüche 1 bis 4, **dadurch gekennzeichnet; dass** die optische Sensorfläche durch mindestens zwei Photodioden (03, 04) gebildet ist, die gemeinsam mit der Lichtquelle (02) auf einem Siliziumsubstrat angeordnet sind.

6. Neigungssensor nach Anspruch 5, **dadurch gekennzeichnet, dass** die detektierte Lichtmenge der beiden Photodioden (03, 04) bei Fehlen einer Neigung der Bezugsebene (06) im Wesentlichen gleich ist, während bei Vorhandensein einer Neigung die Lichtmenge in den Photodioden (03, 04) gegenläufig verändert ist.

7. Neigungssensor nach Anspruch 5 oder 6, **dadurch gekennzeichnet, dass** die die optische Sensorfläche durch eine Vielzahl segmentförmiger Photodioden (03, 04) gebildet ist, die konzentrisch um die Lichtquelle (02) angeordnet sind, wobei jeweils zwei diametral angeordnete Photodioden (03, 04) ein Sensorsignal liefern.

8. Neigungssensor nach einem der Ansprüche 1 bis 7, **dadurch gekennzeichnet, dass** das Ablenkelement (09) durch eine Kavität in der lichtdurchlässigen Ablenkschicht (08) gebildet ist.

9. Neigungssensor nach Anspruch 8, **dadurch gekennzeichnet, dass** das Ablenkelement (09) kegelstumpfförmig ist, wobei eine zur Lichtquelle gerichtete Deckfläche des Kegelstumpfes einen Durchmesser aufweist, der kleiner als der Durchmesser des Ringstrahles (14) ist, und eine zur Flüssigkeitsschicht (11) gerichtete Basisfläche des Kegelstumpfes einen Durchmesser aufweist, der größer ist als der Durchmesser des Ringstrahls (14).

10. Neigungssensor nach Anspruch 9, **dadurch gekennzeichnet, dass** die Kavität mit einem Gas, einem Vakuum oder einer Flüssigkeit, insbesondere der die Flüssigkeitsschicht (11) bildenden Flüssigkeit gefüllt ist.

## Claims

1. Optoelectronic inclination sensor for determining the inclination of a reference plane (06) relative to the horizontal, comprising:
- a sensor body having a liquid layer (11) whose free surface represents a horizon that can be inclined relative to the reference plane (06), and forms an optical boundary (12) to the adjacent medium;
- at least one light source (02) arranged beneath the liquid layer (11), for the emission of a light beam (14) onto the boundary (12) through the liquid layer (11), wherein the light beam (14) is emitted with a beam axis oriented perpendicularly to the reference plane (06);
- at least one optical sensor surface (03, 04) arranged beneath the liquid layer (11) for the detection of the light beam (14) reflected by the boundary (12); and
- a processing unit for determining the inclination of the reference plane (06) as a function of the light quantity received by the optical sensor surface (03, 04);
**characterized in that**, between the light source (02) and the liquid layer (11), a deflecting layer (08) with a deflecting element (09) for the first total reflection of the light beam (14) is arranged, so that the light beam (14), as a result of this first total reflection, is inclined relative to the boundary (12) in such a manner that a second total reflection occurs at the boundary (12), in both the inclined and also in the non-inclined position.

2. Inclination sensor according to Claim 1, **characterized in that** the light beam is shaped as a ring light beam (14).

3. Inclination sensor according to Claim 1 or 2, **characterized in that** the light source (2) comprises a ring lens and/or a ring-shaped diaphragm for shaping the light beam (14).

4. Inclination sensor according to one of Claims 1-3, **characterized in that** the light source (02) is arranged in a cavity of the silicon substrate.

5. Inclination sensor according to one of Claims 1-4, **characterized in that** the optical sensor surface is formed by at least two photodiodes (03, 04), which are arranged together with the light source (02) on a silicon substrate.

6. Inclination sensor according to Claim 5, **characterized in that** the detected light quantity of the two photodiodes (03, 04), in the case of absence of an inclination of the reference plane (06), is substantially equal, while the presence of an inclination changes in the light quantity in the photodiodes (03, 04) in opposite direction.

7. Inclination sensor according to Claim 5 or 6, **characterized in that** the optical sensor surface is formed by a plurality of segment-shaped photodiodes (03, 04), which are arranged concentrically about the light source (02), wherein in each case two diametrically arranged photodiodes (03, 04) deliver a sensor signal.

8. Inclination sensor according to one of Claims 1-7, **characterized in that** the deflecting element (09) is formed by a cavity in the light permeable deflecting layer (08).

9. Inclination sensor according to Claim 8, **characterized in that** the deflecting element (09) is in the shape of a truncated cone, wherein a cover surface of the truncated cone, which is directed to the light source, has a diameter which is smaller than the diameter of the ring beam (14), and a base surface of the truncated cone, which is directed to the liquid layer (11), has a diameter which is greater than the diameter of the ring beam (14).

10. Inclination sensor according to Claim 9, **characterized in that** the cavity is filled with a gas, a vacuum or a liquid, in particular with the liquid forming the liquid layer (11).

## Revendications

1. Capteur d'inclinaison optoélectronique pour déterminer l'inclinaison d'un plan de référence (06) par rapport à l'horizontale, comprenant :
- un corps de capteur pourvu d'une couche de liquide (11) dont la surface libre représente un horizon inclinable par rapport au plan de référence (06) et forme une surface limite optique (12) par rapport au milieu adjacent ;
- au moins une source lumineuse (02) placée en-dessous de la couche de liquide (11) pour l'émission d'un faisceau lumineux (14) sur la surface limite (12) à travers la couche de liquide (11), le faisceau lumineux (14) étant émis avec un axe de faisceau orienté à la perpendiculaire par rapport au plan de référence (06) ;
- au moins une surface de capteur optique (03, 04) qui est placée en-dessous de la couche de liquide (11) pour la détection du faisceau lumineux (14') réfléchi par la surface limite (12) ; et
- une unité d'évaluation pour déterminer l'inclinaison du plan de référence (06) en fonction de la quantité de lumière reçue à travers la surface de capteur optique (03, 04) ;
**caractérisé en ce qu'**entre la source lumineuse (02) et la couche de liquide (11) est placée une couche de déviation (08) avec un élément de déviation (09) pour la première réflexion totale du faisceau lumineux (14), de sorte qu'au résultat de cette première réflexion totale, le faisceau lumineux (14) soit incliné par rapport à la surface limite (12), de telle sorte qu'une deuxième réflexion totale survienne sur la surface limite (12), aussi bien en position inclinée qu'en position non inclinée.

2. Capteur d'inclinaison selon la revendication 1, **caractérisé en ce que** le faisceau lumineux est formé en tant que faisceau lumineux (14) annulaire.

3. Capteur d'inclinaison selon la revendication 1 ou la revendication 2, **caractérisé en ce que** la source lumineuse (02) comprend une lentille annulaire et/ou un diaphragme annulaire pour la formation du faisceau lumineux (14).

4. Capteur d'inclinaison selon l'une quelconque des revendications 1 à 3, **caractérisé en ce que** la source lumineuse (02) est placée dans une cavité d'un substrat en silicium.

5. Capteur d'inclinaison selon l'une quelconque des revendications 1 à 4, **caractérisé en ce que** la surface de capteur optique est formée par au moins deux photodiodes (03, 04) qui ensemble avec la source lumineuse (02) sont placées sur un substrat en silicium.

6. Capteur d'inclinaison selon la revendication 5, **caractérisé en ce qu'**à défaut d'une inclinaison du plan de référence (06), la quantité de lumière détectée des deux photodiodes (03, 04) est sensiblement identique, alors qu'en présence d'une inclinaison, la quantité de lumière dans les photodiodes (03, 04) a varié à contresens.

7. Capteur d'inclinaison selon la revendication 5 ou la revendication 6, **caractérisé en ce que** la surface de capteur optique est formée par une pluralité de photodiodes (03, 04) en forme de segments, qui sont placées de manière concentrique autour de la source lumineuse (02), chaque fois deux photodiodes (03, 04) placées de manière diamétrale fournissant un signal du capteur.

8. Capteur d'inclinaison selon l'une quelconque des revendications 1 à 7, **caractérisé en ce que** l'élément de déviation (09) est formé par une cavité dans la couche de déviation (08) translucide.

9. Capteur d'inclinaison selon la revendication 8, **caractérisé en ce que** l'élément de déviation (09) est de forme tronconique, une surface de couverture du cône tronqué dirigée vers la source lumineuse présentant un diamètre qui est inférieur au diamètre du faisceau annulaire (14) et une surface de base du cône tronqué dirigée vers la couche de liquide (11) présentant un diamètre qui est supérieur au diamètre du faisceau annulaire (14).

10. Capteur d'inclinaison selon la revendication 9, **caractérisé en ce que** la cavité est remplie d'un gaz, d'un vide ou d'un liquide, notamment du liquide formant la couche de liquide (11).
